(19) **Europäisches Patentamt / European Patent Office / Office européen des brevets**

(11) **EP 1 660 759 B1**

(12) **EUROPÄISCHE PATENTSCHRIFT**

(45) Veröffentlichungstag und Bekanntmachung des Hinweises auf die Patenterteilung:
**19.03.2008 Patentblatt 2008/12**

(21) Anmeldenummer: **04763460.5**

(22) Anmeldetag: **23.07.2004**

(51) Int Cl.:
*F01D 17/08* (2006.01)     *G01K 3/06* (2006.01)

(86) Internationale Anmeldenummer:
**PCT/EP2004/008290**

(87) Internationale Veröffentlichungsnummer:
**WO 2005/028814 (31.03.2005 Gazette 2005/13)**

(54) **VERFAHREN ZUM ERKENNEN EINES BETRIEBSZUSTANDES EINER TURBINE**

METHOD FOR IDENTIFYING THE OPERATING CONDITION OF A TURBINE

PROCEDE POUR DETERMINER LE MODE OPERATOIRE D'UNE TURBINE A GAZ

(84) Benannte Vertragsstaaten:
**CH DE ES GB IT LI**

(30) Priorität: **01.09.2003 EP 03019868**

(43) Veröffentlichungstag der Anmeldung:
**31.05.2006 Patentblatt 2006/22**

(73) Patentinhaber: **SIEMENS AKTIENGESELLSCHAFT**
**80333 München (DE)**

(72) Erfinder: **ADAM, Gottfried**
**53819 Neunkirchen-Seelscheid (DE)**

(56) Entgegenhaltungen:
**EP-A- 1 118 920**     **DE-A- 19 821 956**
**GB-A- 989 011**     **US-A- 5 878 566**
**US-A1- 2002 183 916**

• **PATENT ABSTRACTS OF JAPAN Bd. 014, Nr. 237 (M-0976), 21. Mai 1990 (1990-05-21) -& JP 02 064232 A (HITACHI LTD), 5. März 1990 (1990-03-05)**

**Beschreibung**

Die Erfindung betrifft ein Verfahren zum Erkennen eines Betriebszustandes beim Betrieb einer Turbine gemäss dem Oberbegriff des Anspruchs 1.

Es ist bekannt, dass zum Erkennen eines Betriebszustandes einer Turbine die im Abgas herrschenden Temperaturen kontinuierlich erfasst und ausgewertet werden. Dafür sind an der Innenwand des Abgasgehäuses koaxial gleichmäßig verteilte Temperatur-Messeinrichtungen angeordnet, die die Temperaturen des Abgases erfassen. Zur Bewertung der gemessenen Abgastemperaturen werden Extremwertevergleiche durchgeführt. Für jede Messstelle wird im Probebetrieb die maximal aufgetretene und die minimal aufgetretene Temperatur erfasst und somit ein Temperaturintervall bestimmt. Eine Störung wird dann festgestellt, wenn das Temperatur-Messelement eine Temperatur erfasst, die außerhalb ihres vorher gemessenen Temperaturintervalls liegt.

Auch bekannt ist, dass aus dem zeitlichen Temperaturmittelwert einer Temperatur-Messeinrichtung und der momentanen Temperatur die Differenz bestimmt wird, um den Betriebszustand zu ermitteln.

Diese Bewertungen haben den Nachteil, dass kleine systematische Veränderungen der Austrittstemperaturen, welche unterhalb der vorgegebenen Limits liegen, unberücksichtigt bleiben.

Ferner ist aus der US2002/183916 A1 bekannt, die Winkelverdrehung des Austrittstemperaturfeldes zu berechnen.

Die ermittelte Winkelverdrehung wird zu Normalisierung des Austrittstemperaturfeldes eingesetzt, um Rückschlüsse von Temperaturmessstellen auf dedizierte Can-Brennkammern zu ermöglichen.

Darüber hinaus offenbart die EP 1 118 920 A1 eine Schwingungsüberwachung rotierender Bauteile. Dazu sind ein oder mehrere zueinander versetzt angeordnete Schwingungssensoren vorgesehen. Die aufgenommenen Amplituden und Phasenlagen der Schwingungen bzw. der durch die Schwingungen hervorgerufenen temporären Verschiebungen werden mit diesen Sensoren erfasst und in zwei senkrecht zueinander stehende Komponenten zerlegt, die anschließend jeweils unter Bildung eines gleitenden arithmetischen Mittelwerts zu einer resultierenden Größe mit Amplitude und Phasenlage umgewandelt werden, welche Größe dann zur Zustandanalyse ausgewertet wird.

Außerdem ist aus der JP 02-064232 eine Anzeige für ein Turbinenaustrittstemperaturfeld bekannt.

Aufgabe der vorliegenden Erfindung ist es daher, ein Verfahren zum Erkennen eines Betriebszustandes beim Betrieb einer Turbine anzugeben, mit dem systematische Veränderungen des Betriebszustandes erkennbar und anzeigbar sind.

Die Lösung der auf das Verfahren gerichteten Aufgabe wird durch die Merkmale des Anspruchs 1 gelöst. Vorteilhafte Weiterbildungen sind in den Unteransprüchen angegeben.

Mit der Erfindung wird ein neuer Weg zum Erkennen eines Betriebszustandes beim Betrieb einer Turbine eingeschlagen. Bisher wurden im Abgaskanal an mehreren Positionen örtliche Temperaturmessungen vorgenommen, bei denen die Austrittstemperatur des Abgases erfasst wurde. Die örtliche Lage jeder erfassten Temperatur blieb dabei bisher unberücksichtig. Nun werden alle erfassten Temperaturen mit ihrer jeweils zugehörigen örtlichen Lage unter Momentbildung miteinander zu einer resultierenden Größe zusammengefasst, mittels der eine schnellere und genauere Erkennung von systematischen Veränderungen möglich ist.

Die Abgastemperaturen eines Zeitpunktes werden unter Berücksichtung des Ortes, an dem sie erfasst werden, in ein Koordinatensystem eingetragen. Danach wird jeder Temperaturmesswert auf die beiden Achsen des Koordinatensystems projiziert und somit jeweils in zwei senkrecht zueinander dabei jeweils entweder positiv oder negativ gerichtete Ortskomponenten zerlegt, wobei anschließend für jede Achse die gleichgerichteten Ortskomponenten komponentenweise bezogen auf einen jeweiligen Bezugswert unter Momentbildung zu zwei Momentsummen aufsummiert werden, wobei jeder Bezugswert so gewählt ist, dass die entgegengerichteten Momentsummen gleich groß sind, und dass danach ein aus den beiden Bezugswerten zusammengesetzter Punkt als Schwerpunkt der Austrittstemperaturverteilung zum Erkennen des Betriebszustandes der Gasturbine ausgewertet wird.

Durch die Nutzung der Gesamtinformationen der Austrittstemperaturverteilung werden die Informationen, die bisher unterhalb der Minimalbedingungen lagen, berücksichtigt. Daraus ergibt sich ein höherer Informationsgehalt, der zur einer schnelleren und besseren Zustandserkennung genutzt wird.

In einer vorteilhaften Ausgestaltung wird der Betriebszustand während eines stationären Betriebes der Gasturbine als eine Störung erkannt, wenn der Schwerpunkt als Vektor mit Betrag und Winkel darstellbar ist, und wenn der aktuelle Betrag - oder Winkel -, des Schwerpunktvektors bezogen auf einen zu einem früheren Zeitpunkt bestimmten Betrag - oder Winkel -, eine Differenz aufweist, die einen Toleranzwert überschreitet bzw. unterschreitet. Es werden zwei zu unterschiedlichen Zeitpunkten erfasste Schwerpunkte miteinander verglichen, deren Differenz überwacht wird. Überschreitet die Differenz einen Toleranzwert, wird eine Störung des Betriebes der Turbine erkannt. Die Toleranzwerte werden durch Testbetriebe oder durch Erfahrungswerte ermittelt.

In umgekehrter Betrachtung kann ein ungestörter Betrieb der Gasturbine diagnostiziert werden, wenn der Schwerpunktvektor über die Zeit betrachtet konstant in Betrag und/oder Winkel bleibt.

Das zeitliche Verhalten des Betrages und des Winkels des Schwerpunktvektors - der Schwerpunkt der Austrittstemperaturverteilung - weist im Betrieb der Turbine ein bekanntes Verhalten auf:

Im störungsfreien Betrieb der Gasturbine schwingt sich der Schwerpunktvektor der Austrittstemperaturverteilung auf einen zeitlichen konstanten Betrag mit einem konstanten Winkel ein. Konstant bedeutet dabei, dass zwar innerhalb der durch Toleranzwerte vorgegebenen Schwankungsbreite geringe Änderungen auftreten können, die jedoch auf nicht systematische, sondern auf zufällige Einflüsse zurückzuführen sind.

Treten Laständerungen auf, sind diese ohne Einfluss auf den Betrag des Schwerpunktvektors, da der Betrag grundsätzlich eine Invarianz gegenüber Laständerungen aufweist.

Der Winkel des Schwerpunktvektors ist grundsätzlich abhängig von Laständerungen, da sich mit diesen ebenfalls der Heißgasmassenstrom und damit die Strömungsverhältnisse in der Turbine verändern. Die Veränderung des Heißgasmassenstromes erfolgt durch die Verstellungen der Verdichter-Vorleitschaufeln und/oder durch die Variation des zugeführten Brennstoffmassenstromes.

Die Veränderungen des Heißgasmassenstromes bewirken eine entsprechende Drehung der Austrittstemperaturverteilung. Dies ist jedoch nicht gleichbedeutend mit einer Störung, da diese Winkeländerung auf bekannte Eingriffe in den Betrieb der Gasturbine zurückzuführen ist.

Ändert sich während des stationären Betriebes der Turbine der Betrag oder der Winkel des Schwerpunktvektors wesentlich, so ist dies auf eine systematische Veränderung wie zum Beispiel auf die Kanalverblockung durch einen gelösten Hitzeschildstein zurückzuführen. Die systematischen Veränderungen sind auf einen fehlerbehafteten Betrieb oder auf eine Störung der Gasturbine zurückzuführen, da ein bekannter, äußerer Einfluss fehlt. Ferner führen Brennerstörungen, die Düsenverkokung einerseits oder eine veränderte Flammausrichtung anderseits sein können, zu einem sich verändernden Schwerpunkt der Austrittstemperaturverteilung. Gleichfalls können Strömungsfluktuationen, die sich in Temperaturfluktuationen niederschlagen, zu der Rotation des Winkels führen.

Zweckmäßigerweise ist eine Ebene, in der die Messstellen für die Temperatur-Messeinrichtungen liegen, senkrecht zur Hauptströmungsrichtung des Abgases ausgerichtet und die Hauptströmungsrichtung parallel zur Drehachse einer Welle der Turbine. Die Temperaturen werden demnach im identischen Abstand zur Drehachse der Welle zeitlich verfolgt.

In einer vorteilhaften Weiterbildung sind die Messstellen rotationssymmetrisch zur Drehachse angeordnet. Eine äquidistante Verteilung wird hierdurch erreicht, die wegen der Symmetrie besonders einfach auswertbar ist.

Generell ist das Verfahren für die ständige Überwachung des Betriebes geeignet. Dabei ist es ganz besonders vorteilhaft, wenn das Verfahren bevorzugt während des stationären oder quasi-stationären Betriebes der Turbine zu jedem Zeitpunkt d.h. kontinuierlich angewendet wird, da das Verfahren hier besonders zuverlässige Resultate liefert. Die Zustandsanalyse des Gasturbinenbetriebes mit Hilfe des Schwerpunktvektors ist jedoch prinzipiell auch in einem stark transienten Betrieb - unter geeigneten Modifikationen - durchführbar, wobei es im transienten Betrieb Besonderheiten zu berücksichtigen gilt. Zuverlässige Ergebnisse und Aussagen über das Verhalten der Gasturbine bei Durchlaufen eines transienten Betriebszustands, z.B. Anfahrvorgänge und Abfahrvorgänge, können mithin im Detail untersucht werden.

Zweckmäßigerweise ist die Turbine als Gasturbine ausgebildet.

Die Erfindung wird anhand einer Zeichnung näher erläutert. Dabei zeigen:

Figur 1    eine Gasturbine in einem Längsteilschnitt,

Figur 2    ein kartesisches Koordinatensystem mit einem Diagramm der Austrittstemperaturverteilung,

Figur 3    ein kombiniertes Betrag-Zeit und Winkel-Zeit-Diagramm für einen Schwerpunktvektor der Austrittstemperaturverteilung der Gasturbine und

Figur 4    eine Auswerteeinrichtung für das Überwachungsverfahren

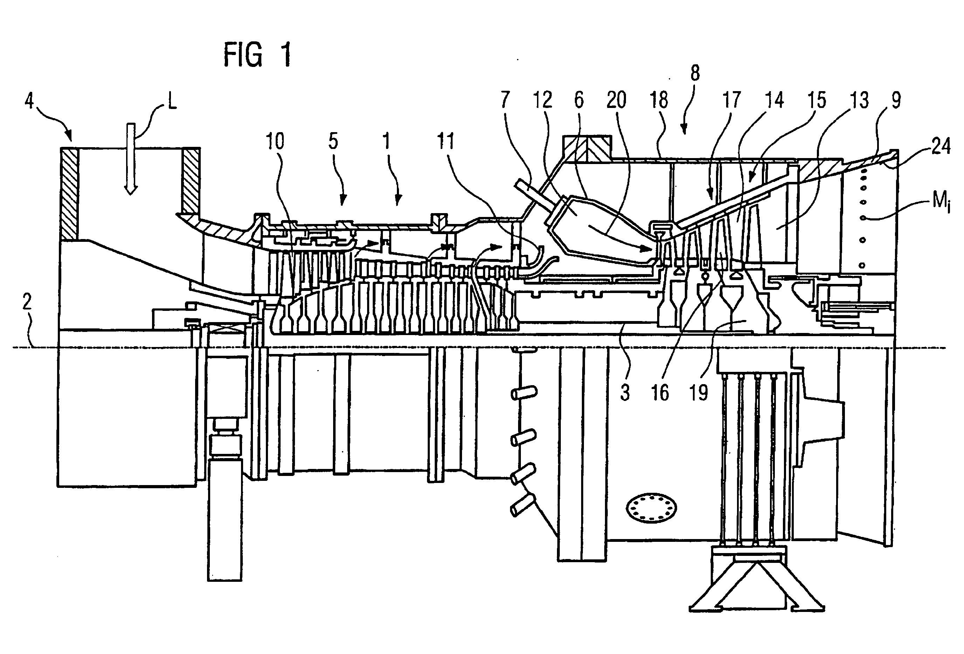

Die Figur 1 zeigt eine Gasturbine 1 in einem Längsteilschnitt. Sie weist im Inneren einen um eine Rotationsachse 2 drehgelagerten Rotor 3 auf, der auch als Turbinenläufer oder Rotorwelle bezeichnet wird. Entlang des Rotors 3 folgen ein Ansauggehäuse 4, ein Verdichter 5, eine torusartige Ringbrennkammer 6 mit mehreren koaxial angeordneten Brennern 7, eine Turbine 8 und ein Abgasgehäuse 9 aufeinander.

Im Verdichter 5 ist ein ringförmiger Verdichterkanal 10 vorgesehen, der sich in Richtung der Ringbrennkammer 6 im Querschnitt verjüngt. Am brennkammerseitigen Ausgang des Verdichters 5 ist ein Diffusor 11 angeordnet, der mit der Ringbrennkammer 6 in Strömungsverbindung steht. Die Ringbrennkammer 6 bildet einen Verbrennungsraum 12 für ein Gemisch aus einem Brennstoff und verdichteter Luft L. Ein Heißgaskanal 13 ist mit dem Verbrennungsraum 12 in Strömungsverbindung, wobei dem Heißgaskanal 13 das Abgasgehäuse 9 nachgeordnet ist.

Im Verdichterkanal 10 und im Heißgaskanal 13 sind jeweils alternierend Schaufelringe angeordnet. Einem aus Leitschaufeln 14 gebildeter Leitschaufelring 15 folgt jeweils ein aus Laufschaufeln 16 geformte Laufschaufelring 17. Die feststehenden Leitschaufeln 14 sind dabei mit dem Stator 18 verbunden, wo hingegen die Laufschaufeln 16 am Rotor 3 mittels einer Turbinenscheibe 19 befestigt sind.

Der Abgaskanal 9 wird durch eine zur Rotationsachse 2 konzentrische Innenwand 24 begrenzt, an der drehfest vierundzwanzig Temperatur-Messeinrichtungen $M_i$ über den Umfang gleichverteilt angeordnet sind. Alle Temperatur-Messeinrichtung $M_i$ liegen dabei in einer gedachten Ebene, die senkrecht zur Rotationsachse 2 steht.

Während des Betriebes der Gasturbine 1 wird vom Verdichter 5 durch das Ansauggehäuse 4 Luft L angesaugt und im Verdichterkanal 10 verdichtet. Die am brennerseitigen Ausgang des Verdichters 5 bereitgestellt Luft L wird durch den Diffusor 11 zu den Brennern 7 geführt und dort mit einem Brennstoff vermischt. Das Gemisch wird dann unter Bildung eines Arbeitsfluids 20 im Verbrennungsraum 10 verbrannt. Von dort aus strömt das Arbeitsfluid 20 in den Heißgaskanal 13. An den in der Turbine 8 angeordneten Leitschaufeln 16 und an den Laufschaufeln 18 entspannt sich das Arbeitsfluid 20 impulsübertragend, so dass der Rotor 3 angetrieben wird und mit ihm eine an ihn angekoppelte Arbeitsmaschine (nicht dargestellt). Im Abgaskanal 9 wird das Arbeitsfluid 20 als Abgas weitergeleitet. Jede Temperatur-Messeinrichtung $M_i$ misst dann die an ihrem Ort herrschende Temperatur $T_i$ des Abgases.

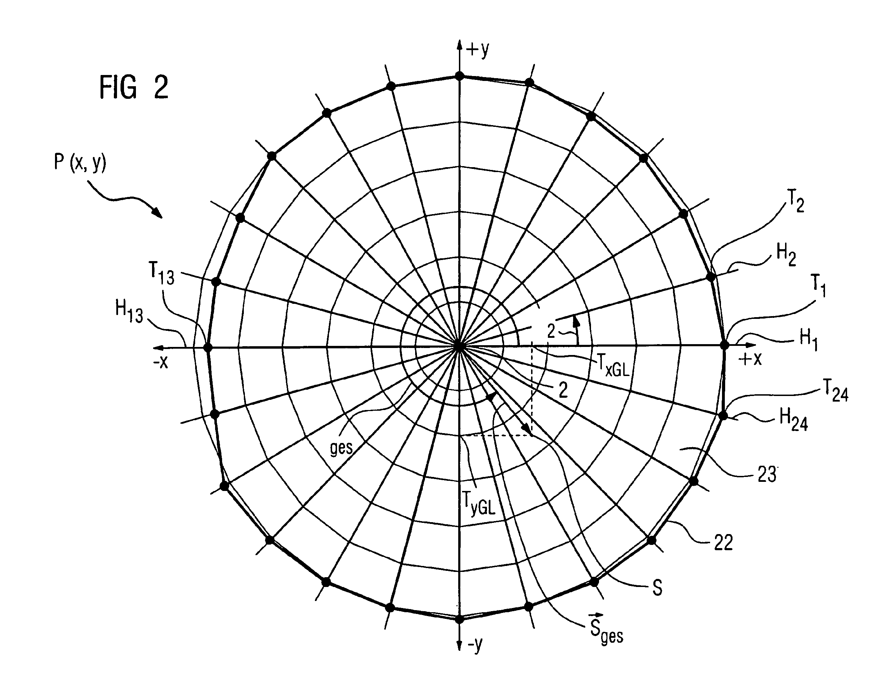

Figur 2 zeigt ein kartesisches Koordinaten-System P($x$,$y$) mit einer Austrittstemperaturverteilung zu einem Zeitpunkt $t_0$.

Es wird definiert:

P(x,y)   :=   ein in der Ebene liegendes kartesisches Koordinaten-System, das von der Rotationsachse 2 im Koordinatenursprung P(0,0) senkrecht geschnitten wird

$M_i$   :=   die Temperatur-Messeinrichtungen, deren Messstellen in der Ebene liegen

n   :=   24, die Anzahl der Temperatur-Messeinrichtungen,

$T_i$   :=   Temperatur der Temperatur-Messeinrichtung $M_i$, für i=1..n

Im Koordinatensystem P(x,y) erstrecken sich strahlenförmig vom Koordinatenursprung P(0,0) vierundzwanzig Hilfsgeraden $H_i$, für i=1..n, zu jeder Messstelle der Temperatur-Messeinrichtungen $M_i$. Somit weist jede Hilfsgerade $H_i$ bezogen auf die positive x-Achse einen Winkel $\Theta_i$ auf, dessen Wert 15˚ oder ein ganzzahliges Vielfaches davon beträgt.

Für jede von den Temperatur-Messeinrichtungen $M_i$ erfasste Temperatur $T_i$ wird auf ihrer zugehörigen Hilfsachse $H_i$ ein Punkt eingetragen, dessen Abstand vom Koordinatenursprung P(0,0) proportional zum erfassten Betrag der Temperatur $T_i$ ist. Somit ergibt sich auf jeder Hilfsachse $H_i$, i=1..n, ein von der örtlichen Temperatur $T_i$ abhängiger Punkt. Für jeden Punkt erfolgt dann mittels der bekannten trigonometrischen Funktionen gemäß

$$T_{x_i} = T_i \cdot \cos(\Theta_i), \quad \text{für } i=1..24 \qquad (1)$$

$$T_{y_i} = T_i \cdot \sin(\Theta_i), \quad \text{für } i=1..24 \qquad (2)$$

eine Projektionen auf die beiden Achsen des Koordinatensystems.

Um eine identische Gewichtung der Messstellen zu erzielen, sind die Temperatur-Messeinrichtungen $M_i$ alle in einer Ebene liegend angeordnet, die sich senkrecht zur Drehachse 2 und damit gleichzeitig zur Hauptströmungsrichtung des Abgases sich erstreckt. Eine andere ungleichmäßige Verteilung der Temperatur-Messeinrichtungen $M_i$ über den Umfang wäre ebenfalls mit dem Verfahren durchführbar.

Um einen Schwerpunkt S der Austrittstemperaturverteilung des Abgases bestimmen zu können, müssen die Momente der einzelnen Temperaturen $T_i$ um den Schwerpunkt S herum im Gleichgewicht stehen. Bei der komponentenweisen Betrachtung, d.h. für jede Achse des Koordinatensystems in jede Richtung, müssen demgemäss jeweils die Summen der entgegengesetzt gerichteten Momente gemäß

$$\sum_{i=1}^{6} M_{+x_i} + \sum_{i=19}^{24} M_{+x_i} = \sum_{i=13}^{24} M_{-x_i} \qquad (3)$$

und

$$\sum_{i=1}^{12} M_{+y_i} = \sum_{i=13}^{24} M_{-y_i} \qquad (4)$$

im Gleichgewicht sein. Jedes einzelne Moment berechnet sich aus einem im Schwerpunkt S gelagerten Hebelarm, der mit der am anderen Ende des Hebelarms wirkenden Komponente, d.h. wirksame Anteil der Temperatur $T_i$, multipliziert wird. Da der Schwerpunkt vorerst unbekannt ist, berechnen sich die Momente im Koordinatensystem auf einen noch unbekannten Bezugswert $T_{GL}$ komponentenweise nach

$$M_{+x_i} = \left(T_{+x_i} - T_{xGL}\right) \cdot T_{+x_i} \qquad (5)$$

$$M_{-x_i} = \left(T_{-x_i} + T_{xGL}\right) \cdot T_{-x_i} \qquad (6)$$

$$M_{+y_i} = \left(T_{+y_i} - T_{yGL}\right) \cdot T_{+y_i} \qquad (7)$$

$$M_{-y_i} = \left(T_{-y_i} + T_{yGL}\right) \cdot T_{-y_i} \qquad (8).$$

Zur Berechnung des Schwerpunktes S werden die Gleichungen (5) und (6) in Gleichung (3) und die Gleichungen (7) und (8) in Gleichung (4) eingesetzt und umgeformt, so dass der Bezugswert der x-Achse sich nach

$$T_{xGL} = \frac{\sum\limits_{i=1}^{6} T_{+x_i}^2 + \sum\limits_{i=19}^{24} T_{+x_i}^2 - \sum\limits_{i=7}^{18} T_{-x_i}^2}{\sum\limits_{i=1}^{6} T_{+x_i} + \sum\limits_{i=7}^{18} T_{-x_i} + \sum\limits_{i=19}^{24} T_{+x_i}} \qquad (9)$$

bestimmen lässt, und der der y-Achse nach

$$T_{yGL} = \frac{\sum\limits_{i=1}^{12} T_{+y_i}^2 - \sum\limits_{i=13}^{24} T_{-y_i}^2}{\sum\limits_{i=1}^{12} T_{+y_i} + \sum\limits_{i=13}^{24} T_{-y_i}} \qquad (10).$$

Die beiden Bezugswerte lassen sich dann als einen Schwerpunktvektor $\vec{S}_{ges}$ gemäß Betrag

$$\left|\vec{S}_{ges}\right| = \sqrt{T_{xGL}^2 + T_{yGL}^2} \qquad (11)$$

und Winkel

$$\varphi_{ges} = \tan\left(\frac{T_{yGL}}{T_{xGL}}\right) \qquad\qquad (12)$$

zusammenfassen. Der Ursprung des Schwerpunktvektors $\vec{S}_{ges}$ liegt dabei im Koordinatenursprung P(0,0) und endet im Schwerpunkt S, der im Punkt P($T_{xGL}$,$T_{yGL}$) liegt. Der Winkel $\varphi_{ges}$ wird auf die positive x-Achse im mathematisch positiven Sinn bezogen, wobei bei der Anwendung der Tangens-Funktion die üblichen Überlegungen zur Größe des Winkels $\varphi_{ges}$ anzuwenden sind.

Zeitaufgelöst - d.h. immer wiederkehrend werden alle ermittelten Temperaturen $T_i$ gemäss der obigen Rechnung zu einem Schwerpunktvektor $\vec{S}_{ges}$ zusammengefasst.

In Figur 2 sind die Punkte der auf den Hilfsachsen $H_i$ eingetragenen Temperaturen $T_i$ über eine Umfangslinie 22 miteinander verbunden, so dass sie gemeinsam eine vieleckige, fast kreisförmige Fläche 23 einschließen, deren Schwerpunkt S durch Anwendung des Verfahrens bestimmt wird.

Für eine ideale Gasturbine 1 mit einer symmetrischen Austrittstemperaturverteilung müsste sich als Schwerpunktvektor $\vec{S}_{ges}$ der Nullvektor ergeben.

Vergrößert sich der Betrag $|\vec{S}_{ges}|$ des Schwerpunktvektors $\vec{S}_{ges}$ wesentlich, so deformiert sich die Austrittstemperaturverteilung bezogen auf den Ursprung des Koordinatensystems zunehmend. Verkleinert sich der Betrag $|\vec{S}_{ges}|$, so wird die Austrittstemperaturverteilung symmetrischer.

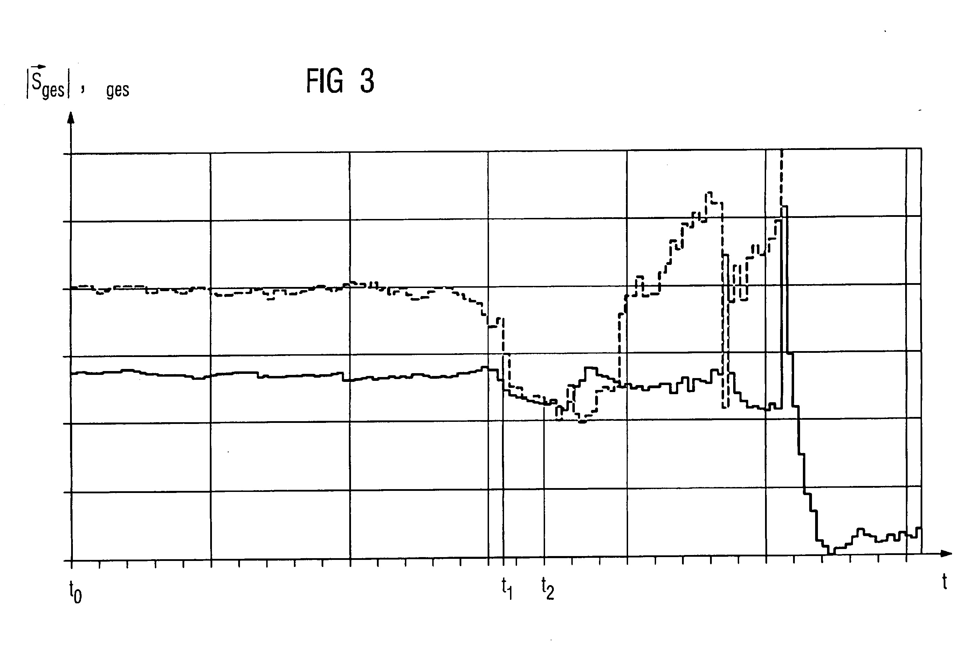

In Figur 3 ist der zeitliche Verlauf des Schwerpunktvektors $\vec{S}_{ges}$ in einem kombinierten Betrag-Zeit- und Winkel-ZeitDiagramm dargestellt. Der Schwerpunktvektor $\vec{S}_{ges}$ wird durch den Betrag $|\vec{S}_{ges}|$ und den Winkel $\varphi_{ges}$ beschrieben, wobei der Winkel $\varphi_{ges}$ in einer gestrichelten Linienart und der Betrag $|\vec{S}_{ges}|$ als Volllinie dargestellt ist.

Im stationären ungestörten Betrieb der Gasturbine ab dem Zeitpunkt t=$t_0$ bis zum Zeitpunkt t=$t_1$ verläuft die Kennlinie des Betrages $|\vec{S}_{ges}|$ annähernd konstant innerhalb einer geringen

Schwankungsbreite. Ebenso ist der Winkel $\varphi_{ges}$ innerhalb einer geringen Schwankungsbreite als konstant zu betrachten.

Zum Zeitpunkt t=$t_1$ tritt während des stationären Betriebs durch eine Teilblockade des Turbineneintrittraums eine systematische Veränderung ein, die mittels des Verfahren erkannt wird.

Ab dem Zeitpunkt t=$t_1$ ändert sich der Winkel $\varphi_{ges}$ wesentlich und sinkt ungefähr auf die Hälfte seines vorherigen Wertes ab. Der Betrag $|\vec{S}_{ges}|$ bewegt sich ab dem Zeitpunkt t=$t_2$ außerhalb seiner Schwankungsbreite. Durch die nicht geringfügige Änderung des Winkels $\varphi_{ges}$ und des Betrages $|\vec{S}_{ges}|$ ist die Störung frühzeitiger und leichter erkennbar.

Mit den bisher aus dem Stand der Technik bekannten Überwachungsverfahren sind zwar die Temperaturänderungen notiert worden, jedoch überschritten die geringen systematischen Temperaturänderungen nicht die Grenzwerte, so dass kein fehlerhafter Betrieb diagnostiziert wurde. Daher wurde dieser Störfall - die Teilblockade des Turbineneintrittraums mit daraus resultierender Oszillationsanregungen der ersten Laufschaufelreihe und anschließenden Schaufelbrüchen - mit einem Überwachungsverfahren gemäß der EP 1 118 920 A1 nicht früh genug erkannt.

Das in der EP 1 118 920 A1 beschriebene Verfahren zerlegt zwar die ermittelten gleitenden Mittelwerte in zwei senkrecht zueinander stehenden Komponenten, aus denen eine resultierende Größe mit Betrag und Winkel bestimmt wird, jedoch erfolgt dort keine Wichtung der Komponenten, insbesondere keine variable Wichtung, nach Art einer Momentbildung. Im erfindungsgemäßen Verfahren wirkt jede Temperatur $T_i$, beispielsweise die Temperatur $T_{+xi}$, mit dem ihr zugeordneten Hebelarm, beispielsweise $T_{+xi}$ minus $T_{xGL}$, - vergleichbar mit einer Momentbildung im physikalischen Sinne - um den zu ermittelnden Schwerpunkt S der Fläche; gemäß den Gleichungen (5) bis (8).

Durch die Verschiebung des Schwerpunktes S, d.h. des Punktes P($T_{xGL}$,$T_{yGL}$), verändert sich auch jeder Hebelarm und somit die Wichtung jeder Temperatur $T_i$. Dadurch wird das erfindungsgemäße Verfahren besonders sensibel bezüglich kleinster Änderungen in der Austrittstemperaturverteilung. Zudem stellt das Verfahren eine weitere Verbesserung gegenüber der einfachen Mittelwertbildung dar, da diese einfache Mittelwertbildung symmetrische Temperaturverschiebungen nicht zwingend aufzeigt und keinen Aufschluss über die geometrische Ausrichtung und Verdrehung der Austrittstemperaturverteilung gibt.

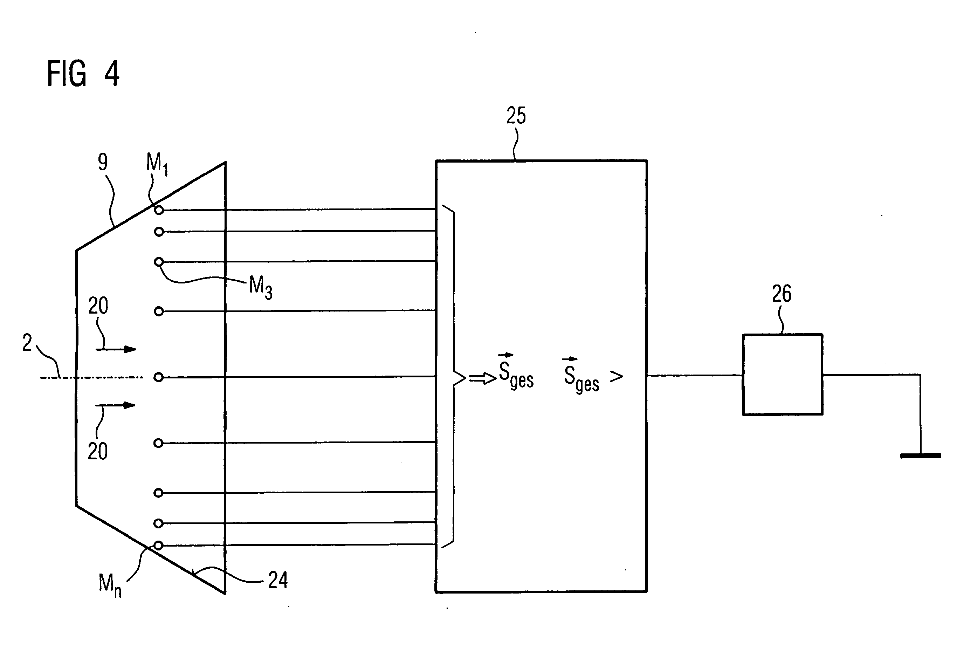

In Figur 4 ist die Vorrichtung zum Überwachen des Schwerpunktvektors $\vec{S}_{ges}$ gezeigt, die nicht zum Gegenstand der Erfindung gehört. Sie weist eine Auswerteeinrichtung 25 auf, die das Verfahren anwendet. Dabei ist die Auswerteeinrichtung 25 mit sämtlichen Temperatur-Messeinrichtungen $M_i$ und mit einer Anzeigeeinrichtung 26 verbunden. Aus den erfassten Temperaturen $T_i$ berechnet die Auswerteeinrichtung 25 den Schwerpunktvektors $\vec{S}_{ges}$ und überprüft, ob dessen Betrag $|\vec{S}_{ges}|$ oder dessen Winkel $\varphi_{ges}$ außerhalb eines Toleranzintervalls liegt. Ist dies der Fall, generiert die Auswerteeinrichtung 25 ein Signal für die Anzeigeeinrichtung 26, die dann als Betriebszustand eine Störung angezeigt.

Die Anzeigeeinrichtung 26 kann ein Monitor oder eine Kontrolllampe sein.

Durch die stetige Überwachung des Betrages $|\vec{S}_{ges}|$ und des Winkels $\varphi_{ges}$ kann deren zeitliche Änderung bei fehlen eines äußeren bekannten Einflusses als eine systematische Veränderung frühzeitig erkannt werden. Diese weisen dann frühzeitiger auf Fehler oder Störungen hin, so dass Folgeschäden an der Gasturbine vermieden werden können, bzw. so dass ein rechtzeitiger Eingriff in den Betrieb der Turbine zur Korrektur erfolgen kann.

**Patentansprüche**

1. Verfahren zum Erkennen eines Betriebszustandes beim Betrieb einer Turbine (1),
   bei dem ein heißes Abgas durch ein der Turbine (1) nachgeschaltetes Abgasgehäuse (9) strömt und die Temperatur des Abgases im Abgasgehäuse (9) zeitaufgelöst erfasst wird, wobei in einer Ebene quer zur Hauptströmungsrichtung des Abgases eine Anzahl von Temperaturmesswerten des Abgases bezogen auf einen Ursprung eines gedachten kartesischen Koordinatensystems jeweils ortsaufgelöst erfasst wird, dass die Temperaturmesswerte auf die beiden Achsen des Koordinatensystems projiziert und somit jeweils in zwei senkrecht zueinander dabei jeweils entweder positiv oder negativ gerichtete Ortskomponenten zerlegt werden,
   **dadurch gekennzeichnet, dass** für jede Achse die gleichgerichteten Ortskomponenten anschließend komponentenweise bezogen auf einen jeweiligen Bezugswert unter Momentbildung zu zwei Momentsummen aufsummiert werden, wobei jeder Bezugswert so gewählt ist, dass die entgegengerichteten Momentsummen gleich groß sind, und dass danach ein aus den beiden Bezugswerten zusammengesetzter Punkt als Schwerpunkt der Temperaturverteilung zum Erkennen des Betriebszustandes ausgewertet wird und
   wobei jede Momentbildung durch die Berechnung eines im Bezugswert gelagerten Hebelarms erfolgt, der mit der am anderen Ende des Hebelarms wirkenden wirksamen Anteil des Temperaturmesswertes multipliziert wird.

2. Verfahren nach Anspruch 1
   **dadurch gekennzeichnet,**
   **dass** der Schwerpunkt als Vektor mit Betrag und Winkel darstellbar ist, und dass der Betriebszustand als eine Störung erkannt wird, wenn der aktuelle Betrag - oder Winkel - des Schwerpunktvektors bezogen auf einen eines zu einem früheren Zeitpunkt gemessenen Betrag eine Differenz aufweist, die einen Toleranzwert überschreitet.

3. Verfahren nach Anspruch 1 oder 2,
   **dadurch gekennzeichnet, dass**
   die Ebene senkrecht zur Hauptströmungsrichtung des Abgases steht und die Hauptströmungsrichtung parallel zur Drehachse (2) einer Welle der Turbine (1) verläuft.

4. Verfahren nach Anspruch 1, 2 oder 3,
   **dadurch gekennzeichnet, dass**
   alle örtlichen Temperaturmesswerte im gleichen Abstand zur Drehachse (2) der Welle erfasst werden.

5. Verfahren nach einem der vorherigen Ansprüche,
   **dadurch gekennzeichnet, dass**
   die örtlichen Temperaturmesswerte rotationssymmetrisch zur Drehachse (2) erfasst werden.

6. Verfahren nach einem der vorherigen Ansprüche,
   **dadurch gekennzeichnet, dass**
   es während des stationären Betriebes der Turbine (1) angewendet wird.

**Claims**

1. Method for identifying an operating state during operation of a turbine (1), in which a hot exhaust gas flows through an exhaust gas housing (9) downstream of the turbine (1), and the temperature of the exhaust gas in the exhaust gas housing (9) is detected in a time-resolved fashion, in a plane transverse to the principal flow direction of the exhaust gas a number of measured temperature values of the exhaust gas being respectively detected in a spatially resolved fashion with reference to an origin of an imaginary Cartesian coordinate system, the measured temperature values being projected onto the two axes of the coordinate system and being therefore respectively decomposed into two spatial components perpendicular to one another and respectively directed either positively or negatively, **characterized in that** the identically directed spatial components are subsequently summed up for each axis component by component with reference to a respective reference value and with the formation of moments to form two moment sums, each reference value being selected such that the oppositely directed moment sums are equally large, and that thereafter a point composed from the two reference values is evaluated as centroid of the temperature distribution for the purpose of identifying the operating state, and each formation of moments being performed by calculating a lever arm that is pivoted at the reference value and which is multiplied by the effective component of the measured temperature value that acts at the other end of the lever arm.

2. Method according to claim 1, **characterized in that** the centroid can be represented as a vector having magnitude and angle, and **in that** the operating state is identified as a disturbance when the current magnitude - or angle - of the centroid vector exhibits a difference with reference to a magnitude measured at an earlier instant, that exceeds a tolerance value.

3. Method according to claim 1 or 2, **characterized in that** the plane is perpendicular to the principal flow direction of the exhaust gas, and the principal flow direction runs parallel to the rotation axis (2) of a shaft of the turbine (1).

4. Method according to claim 1, 2 or 3, **characterized in that** all the spatial measured temperature values are detected at the same spacing from the rotation axis (2) of the shaft.

5. Method according to one of the preceding claims, **characterized in that** the spatial measured temperature values are detected in a fashion rotationally symmetrical relative to the rotation axis (2).

6. Method according to one of the preceding claims, **characterized in that** it is applied during the stationary operation of the turbine (1).

## Revendications

1. Procédé de détection de l'état d'une turbine (1) en cours de fonctionnement, dans lequel
un gaz d'échappement chaud passe dans un carter de gaz d'échappement (9) monté en aval de la turbine (1) et la température du gaz d'échappement dans le carter de gaz d'échappement est détectée avec résolution dans le temps, un certain nombre de valeurs de mesure de la température du gaz d'échappement étant détecté avec résolution dans le temps, dans un plan transversalement à la direction d'écoulement principale du gaz d'échappement, en se référant à une origine d'un système imaginaire de coordonnées cartésiennes de sorte que les valeurs de mesure de température sont projetées sur les deux axes du système de coordonnées et sont ainsi décomposées respectivement en deux composantes spatiales orientées positivement ou négativement, **caractérisé en ce que**, pour chaque axe, les coordonnées spatiales de même orientation sont ensuite additionnées composante par composante en se rapportant à une valeur de référence respective avec formation d'un moment pour donner deux sommes de moment, chaque valeur de référence étant choisie de telle sorte que les sommes de moment opposées sont de même grandeur et
**en ce qu'**on exploite ensuite un point, constitué des deux valeurs de référence et utilisé comme barycentre de la distribution de température, pour détecter l'état de fonctionnement, chaque formation de moment étant effectuée en calculant un bras de levier qui est situé dans la valeur de référence et qui est multiplié par la proportion de la valeur de mesure de température qui agit à l'autre extrémité du bras de levier.

2. Procédé selon la revendication 1, **caractérisé en ce que** le barycentre peut être représenté sous la forme d'un vecteur ayant une norme et un angle, et **en ce que** l'état de fonctionnement est détecté sous la forme d'une perturbation lorsque la norme actuelle, ou l'angle actuel, du vecteur barycentrique présente une différence, supérieure à une valeur de tolérance, en se référant à une valeur absolue mesurée à un instant antérieur.

3. Procédé selon la revendication 1 ou 2, **caractérisé en ce que** le plan est perpendiculaire à la direction d'écoulement principale du gaz d'échappement et la direction d'écoulement principale s'étend parallèlement à l'axe de rotation (2) d'un arbre de la turbine (1).

4. Procédé selon la revendication 1, 2 ou 3, **caractérisé en ce que** toutes les valeurs spatiales de mesure de température sont détectées à la même distance de l'axe de rotation (2) de l'arbre.

5. Procédé selon l'une des revendications précédentes, **caractérisé en ce que** les valeurs spatiales de mesure de température sont détectées en symétrie de révolution par rapport à l'axe de rotation (2).

**6.** Procédé selon l'une des revendications précédentes, **caractérisé en ce qu'**il est utilisé pendant le fonctionnement stationnaire de la turbine (1).

FIG 1

FIG 2

FIG 3

12

EP 1 660 759 B1

# FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2002183916 A1
- EP 1118920 A1

- JP 2064232 A